# EUROPEAN PATENT APPLICATION

(11) **EP 3 225 508 A1**
(43) Date of publication of application: **04.10.2017**
(21) Application number: 17162221.0
(22) Date of filing: 22.03.2017
(51) Int. Cl.: B62D 5/00, F16H 57/023, F16H 57/08

(54) **CLUTCH, STEERING DEVICE, AND METHOD FOR DISASSEMBLING CLUTCH**

(30) Priority: 29.03.2016 JP 2016066909
(71) Applicant: Showa Corporation, Gyoda City Saitama 361-8506 (JP)
(72) Inventor: SEKIKAWA, Shinsuke, Haga-gun, Tochigi 321-3325 (JP)
(74) Representative: Nordmeyer, Philipp Werner

(57) **Abstract**

A clutch (30) is configured to mechanically establish and disestablish a torque transmission path between an input shaft (105) through which a torque is input and an output shaft through which the torque is output. The clutch (30) includes a sun gear (32), an internal gear (34), planetary gears (33), and a carrier (35). The sun gear (32) is configured to switch between a fixed state and a non-fixed state. The internal gear (34) is coupled to the input shaft (105) in a torque transmittable manner. The planetary gears (33) are configured to mesh with the sun gear (32) and the internal gear (34). The carrier (35) is coupled to the output shaft in a torque transmittable manner and configured to support the planetary gears (33) rotatably. The carrier (35) includes a coupling portion (35A) to be coupled to a detachment member (82, 92) configured to detach the carrier (35) from the clutch (30).

## Description

### BACKGROUND OF THE INVENTION

### FIELD OF THE INVENTION

The present invention relates to a clutch, a steering device, and a method for disassembling the clutch.

### DISCUSSION OF THE BACKGROUND

Japanese Unexamined Patent Application Publication No. 2008-189077 discloses a clutch generally used for a Steer-By-Wire (SBW) steering device. The clutch mechanically establishes and disestablishes a motive power transmission path between a steering member and a wheel-turning shaft. The clutch includes a planetary gear mechanism.

The clutch disclosed in Japanese Unexamined Patent Application Publication No. 2008-189077 includes a sun gear, an internal gear, planetary gears, and a carrier. The planetary gears mesh with the sun gear and the internal gear. The carrier supports the planetary gears rotatably. An input shaft is coupled to the internal gear, and an output shaft is coupled to the carrier. When the sun gear is locked or unlocked, the motive power transmission path is mechanically established between the input shaft and the output shaft.

### SUMMARY OF THE INVENTION

According to one aspect of the present invention, a clutch is configured to mechanically establish and disestablish a torque transmission path between an input shaft through which a torque is input and an output shaft through which the torque is output. The clutch includes a sun gear, an internal gear, planetary gears, and a carrier. The sun gear is configured to switch between a fixed state and a non-fixed state. The internal gear is coupled to the input shaft in a torque transmittable manner.

The planetary gears are configured to mesh with the sun gear and the internal gear. The carrier is coupled to the output shaft in a torque transmittable manner and configured to support the planetary gears rotatably. The carrier includes a coupling portion to be coupled to a detachment member configured to detach the carrier from the clutch.

According to another aspect of the present invention, a steering device includes a clutch configured to mechanically establish and disestablish a torque transmission path between an input shaft through which a torque is input and an output shaft through which the torque is output. The clutch includes a sun gear, an internal gear, planetary gears, and a carrier. The sun gear is configured to switch between a fixed state and a non-fixed state. The internal gear is coupled to the input shaft in a torque transmittable manner. The planetary gears are configured to mesh with the sun gear and the internal gear. The carrier is coupled to the output shaft in a torque transmittable manner and configured to support the planetary gears rotatably. The carrier includes a coupling portion to be coupled to a detachment member configured to detach the carrier from the clutch. The method includes coupling the detachment member to the coupling portion to detach the carrier from the clutch.

According to the other aspect of the present invention, a method is for disassembling a clutch configured to mechanically establish and disestablish a torque transmission path between an input shaft through which a torque is input and an output shaft through which the torque is output. The clutch includes a sun gear, an internal gear, planetary gears, and a carrier. The sun gear is configured to switch between a fixed state and a non-fixed state. The internal gear is coupled to the input shaft in a torque transmittable manner. The planetary gears are configured to mesh with the sun gear and the internal gear. The carrier is coupled to the output shaft in a torque transmittable manner and configured to support the planetary gears rotatably. The carrier includes a coupling portion to be coupled to a detachment member configured to detach the carrier from the clutch. The method includes coupling the detachment member to the coupling portion to detach the carrier from the clutch.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram illustrating a configuration of essential components of a steering device according to embodiment 1;
FIG. 2 is a perspective view of an internal configuration of a clutch and components surrounding it in embodiment 1;
FIG. 3 is a cross-sectional view of the internal configuration of the clutch according to embodiment 1;
FIG. 4 is a perspective view of a configuration of a carrier and components surrounding it in embodiment 1;
FIGs. 5A and 5B illustrate the configuration of the carrier in embodiment 1, of which FIG. 5A is a top view of the carrier, and FIG. 5B is a side view of the carrier;
FIG. 6 is a perspective view of a coupling portion and a detachment member in

### embodiment 2; and

FIG. 7 is a perspective view of a coupling portion and a detachment member in embodiment 3.

The embodiments will now be described with reference to the accompanying drawings, wherein like reference numerals designate corresponding or identical elements throughout the various drawings.

### Embodiment 1

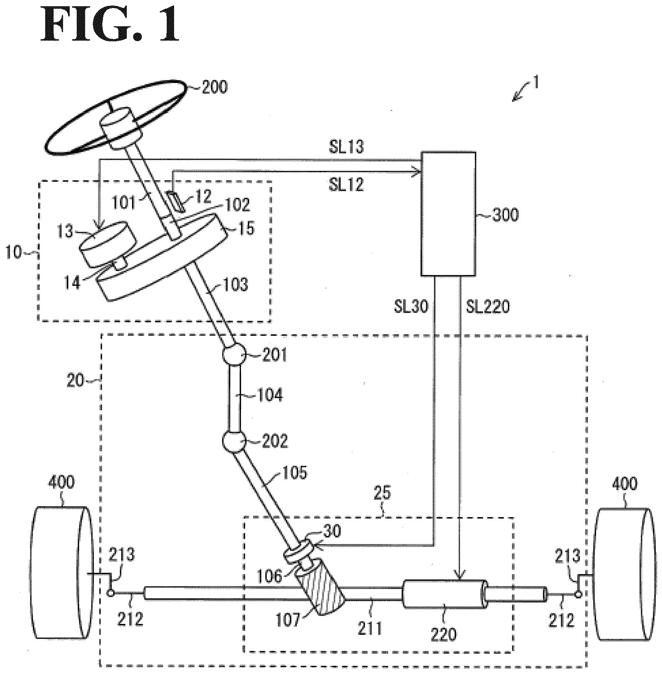

A steering device according to one embodiment will now be described with reference to FIG. 1. FIG. 1 is a diagram schematically illustrating a configuration of essential components of the steering device 1 according to embodiment 1. As illustrated in FIG. 1, the steering device 1 includes a steering unit 10, a wheel-turning unit 20, a steering member 200, and a controller 300. The steering device 1 is used for turning wheels 400 in accordance with the driver's steering operation through the steering member 200.

The steering device 1 according to embodiment 1 is a steer-by-wire steering device, which has at least two functions, namely a function of mechanically establishing and disestablishing a torque transmission path between the steering member 200 and the wheel-turning unit 20, and a function of electrically controlling a turning angle of the wheels 400 in accordance with a steering operation through the steering member 200 in a state in which the torque transmission path is uncoupled.

As illustrated in FIG. 1, a steering wheel having a wheel shape is taken as an example of the steering member 200. This configuration, however, is not intended in a limiting sense. A device having other shape and mechanism may be used insofar as the device is capable of accepting a steering operation by the driver.

### Steering Unit 10

The steering unit 10 has both a function of accepting the driver's steering operation through the steering member 200 and a function of mechanically establishing and disestablishing the torque transmission path between the steering member 200 and the wheel-turning unit 20. Also, the steering unit 10 has a function of generating reaction force with respect to the steering operation and transmitting the reaction force to the steering member 200.

As illustrated in FIG. 1, the steering unit 10 includes an upper steering shaft 101, an intermediate steering shaft 102, a lower steering shaft 103, a torque sensor 12, a motive power generator 13, a motive power transmission shaft 14, and a motive power transmitter 15.

In this description, the upper steering shaft 101, the intermediate steering shaft 102, and the lower steering shaft 103 will be occasionally referred to as "steering shaft" collectively.

Also, in this description, "upper end" will refer to an end portion on the upstream side in the transmission path of steering force in accordance with a steering operation by the driver (namely, an end on the input side) while "lower end" will refer to an end portion on the downstream side in the transmission path of steering force (namely, an end on the output side).

In embodiment 1, an upper end of the upper steering shaft 101 is coupled to the steering member 200 in a torque transmittable manner. In this description, "coupled in a torque transmittable manner" refers to coupling of a first member to a second member in such a manner that the second member rotates in accordance with rotation of the first member. For example, its signification at least includes a case where the first member and the second member are integral to each other, a case where the second member is directly or indirectly secured to the first member, and a case where the first member and the second member are coupled to each other through a component such as a joint in such a manner that the first member and the second member operate in conjunction with each other.

In embodiment 1, the upper end of the upper steering shaft 101 is secured to the steering member 200 in such a manner that the steering member 200 and the upper steering shaft 101 integrally rotate.

The upper steering shaft 101 and the intermediate steering shaft 102 are coupled to each other in a torque transmittable manner and elastically. The torque sensor 12 detects torsion caused between the upper steering shaft 101 and the intermediate steering shaft 102.

Specifically, the upper steering shaft 101 and the intermediate steering shaft 102 each have a cavity inside although not illustrated. A torsion bar is disposed in the cavities to elastically couple the upper steering shaft 101 and the intermediate steering shaft 102. When the driver performs a steering operation through the steering member 200, a torsion angle *θ_{T}* is caused between the upper steering shaft 101 and the intermediate steering shaft 102 in accordance with the magnitude of a torque *T* of the steering operation. Then, the torque sensor 12 detects this torsion angle *θ_{T}* and outputs to the controller 300 a torque sensor signal SL12 indicating a detection result. It is noted that the steering unit 10 may include a steering angle sensor to detect a steering angle of the steering member 200, for example, so as to output to the controller 300 a signal indicating a steering angle or a steering angle speed detected.

The motive power generator 13 applies a torque to the motive power transmission shaft 14 in accordance with a torque control signal SL13 output from the controller 300.

In a non-limiting embodiment, the motive power generator 13 may be a motor main body, and the motive power transmission shaft 14 may be a motor output shaft that penetrates the motor main body and is rotated by the motor main body. The motive power transmission shaft 14 may be another shaft coupled to the motor output shaft in a torque transmittable manner.

The motive power transmitter 15 is coupled to the motive power transmission shaft 14 in a torque transmittable manner with respect to the motive power transmission shaft 14. The motive power transmitter 15 is coupled to the intermediate steering shaft 102 in a torque transmittable manner.

The motive power transmitter 15 is a motive power transmission mechanism to transmit torque between the motive power transmission shaft 14 and the intermediate steering shaft 102. As the motive power transmitter 15, for example, gear-drive, belt-drive, chain-drive, friction-drive, and traction-drive motive power transmission mechanisms or a combination of these motive power transmission mechanisms may be used. The gear-drive motive power transmission mechanism may include, for example, helical gears, planetary gears, and a combination of a worm gear and a worm wheel. The friction-drive motive power transmission mechanism and the traction-drive motive power transmission mechanism may include, for example, planetary rollers. The motive power transmitter 15 may not necessarily include reduction gears.

With the above-described configuration, the torque generated by the motive power generator 13 is transmitted to the intermediate steering shaft 102 through the motive power transmission shaft 14 and the motive power transmitter 15.

### Controller 300

The controller 300 controls wheel-turning force generated by a wheel-turning force generator 220 and torque generated by the motive power generator 13 in accordance with a steering operation by the driver.

Specifically, referring to the torque sensor signal SL12 output from the torque sensor 12, the controller 300 generates the torque control signal SL13 for controlling the torque generated by the motive power generator 13 and a wheel-turning force control signal SL220 for controlling the wheel-turning force generated by the wheel-turning force generator 220. The controller 300 respectively outputs the torque control signal SL13 and the wheel-turning force control signal SL220 to the motive power generator 13 and the wheel-turning force generator 220.

The controller 300 may further refer to such signals as a signal indicating a steering angle of the steering member 200 and a vehicle speed signal from a vehicle speed sensor so as to generate the torque control signal SL13 and the wheel-turning force control signal SL220.

The controller 300 outputs the clutch control signal SL30 to the clutch 30 so as to control switching between a coupled state and an uncoupled state of the clutch 30.

When the clutch 30 is in the uncoupled state, the controller 300 controls the motive power generator 13 to generate a reaction force with respect to a steering operation by the driver. Specifically, the controller 300 controls the motive power generator 13 to transmit to the steering shaft a reaction force torque in a reverse direction to the driver's steering torque input through the steering member 200. This enables the driver to obtain a tactile response to the steering operation.

The specific control method of the clutch 30 by the controller 300 should not limit embodiment 1. For example, the controller 300 may be arranged to switch the clutch 30 to the coupled state in such an occasion as when some malfunction occurs in the steering device 1 and at the time of ignition off. With this configuration, at the time of occurrence of malfunction and ignition off, it is possible for the driver to turn the wheels 400 even without passing through an electric path.

When the clutch 30 is in the coupled state, the controller 300 may be arranged to control the motive power generator 13 in such a manner that torque in the same direction as the driver's steering torque input through the steering member 200 is transmitted to the steering shaft. Thus, even in the coupled state of the clutch 30, it is possible for the driver to perform the steering operation without requiring large force.

### Wheel-Turning Unit 20

The wheel-turning unit 20 is arranged to turn the wheels 400 in accordance with a steering operation by the driver which has been accepted by the steering unit 10.

As illustrated in FIG. 1, the wheel-turning unit 20 includes a first universal joint 201, an intermediate shaft 104, a second universal joint 202, an input shaft (input shaft) 105, the clutch 30, a pinion shaft (output shaft) 106, a pinion gear 107, a rack shaft (wheel-turning shaft) 211, tie rods 212, knuckle arms 213, and the wheel-turning force generator 220.

A downstream side of the input shaft 105, the clutch 30, the pinion shaft 106, the pinion gear 107, part of the rack shaft 211, and the wheel-turning force generator 220 are accommodated in a pinion box 25. In embodiment 1, the pinion shaft 106 includes a single member. This configuration, however, should not be construed in a limiting sense. The pinion shaft 106 may include a plurality of members.

An upper end of the intermediate shaft 104 is coupled to a lower end of the lower steering shaft 103 through the first universal joint 201 in a torque transmittable manner.

A lower end of the intermediate shaft 104 is coupled to an upper end of the input shaft 105 through the second universal joint 202 in a torque transmittable manner.

The pinion gear 107 is coupled to a lower end of the pinion shaft 106 in a torque transmittable manner with respect to the pinion shaft 106. Specifically, the pinion gear 107 is secured to the pinion shaft 106 to make the pinion shaft 106 and the pinion gear 107 integrally rotate.

In embodiment 1, a rack to mesh with the pinion gear 107 is formed on a portion of the rack shaft 211 that is opposed to the pinion gear 107.

In embodiment 1, the clutch 30 is coupled to a lower end of the input shaft 105. The clutch 30 mechanically establishes and disestablishes the torque transmission path between the steering member 200 and the wheel-turning unit 20 in accordance with a clutch control signal SL30 output from the controller 300. Specifically, the clutch 30 mechanically establishes and disestablishes torque transmission between the lower end of the input shaft 105 and the upper end of the pinion shaft 106 in accordance with the clutch control signal SL30.

In embodiment 1, when the clutch 30 is in the coupled state, the driver's steering operation through the steering member 200 causes the pinion gear 107 to rotate to displace the rack shaft 211 in the axial direction.

Meanwhile, when the clutch 30 is in the uncoupled state, the wheel-turning force generator 220 generates wheel-turning force in accordance with the wheel-turning force control signal SL220 from the controller 300 so as to displace the rack shaft 211 in the axial direction.

When the rack shaft 211 is displaced in the axial direction, the wheels 400 are turned through the tie rods 212 on both ends of the rack shaft 211 and the knuckle arms 213 coupled to the tie rods 212. The present invention, however, should not be limited to the configuration in which the wheel-turning shaft is displaced by the rack pinion mechanism. The wheel-turning shaft may be displaced by other mechanisms (such as a ball screw mechanism).

It is noted that the specific configuration of the wheel-turning force generator 220 should not limit embodiment 1. The wheel-turning force generator 220 may have the following configuration, for example.

### Wheel-Turning Force Generator 220

The wheel-turning force generator 220 may include a motor (not illustrated) and a conversion mechanism to convert rotation of the output shaft of the motor into linear movement of the rack shaft 211 in the axial direction. What is called a ball screw mechanism may be used as the conversion mechanism. The ball screw mechanism includes, for example, a nut (not illustrated), a rack-shaft helical groove (not illustrated), and a plurality of rolling balls (not illustrated). The nut has an inner surface in which a nut helical groove is formed. The nut is rotated by the motor. The rack-shaft helical groove is formed in an outer surface of the rack shaft 211 and has the same pitch as the nut helical groove. The plurality of rolling balls are clamped between the nut helical groove and the helical groove of the rack shaft 211.

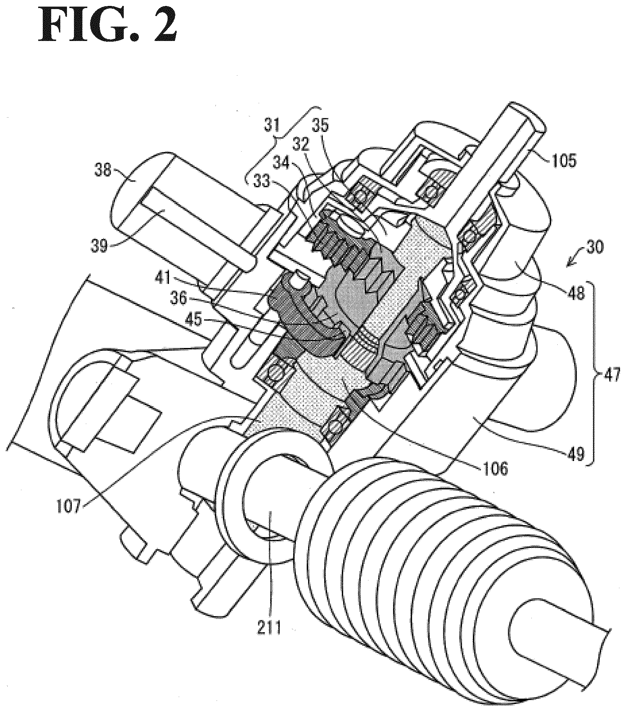

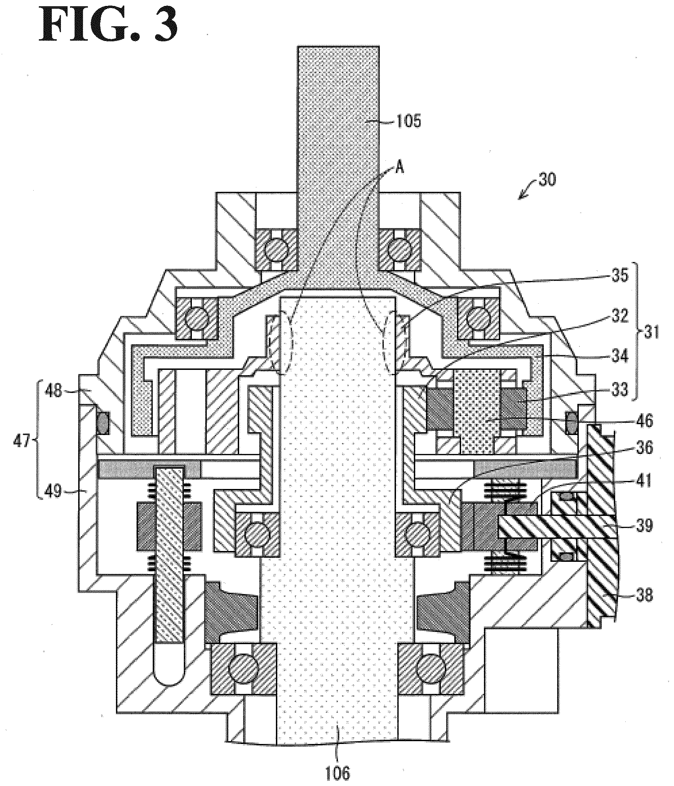

Next, a configuration of the clutch 30 and components surrounding it will be described in detail. FIG. 2 is a perspective view of an internal configuration of the clutch 30 and the components surrounding it. FIG. 3 is a cross-sectional view of the internal configuration of the clutch 30.

### Housing 47

The clutch 30 according to embodiment 1 includes a housing 47. The housing 47 is hollow and includes a first housing 48 and a second housing 49. The first housing 48 is disposed on the input shaft 105 (the input shaft of the clutch 30) side. The second housing 49 is disposed on the pinion shaft 106 (the output shaft of the clutch 30) side. The first housing 48 is detachably attached to the second housing 49. It is noted that the input shaft 105 side refers to a side where the input shaft 105 extends from the clutch 30, and that the pinion shaft 106 side refers to a side where the pinion shaft 106 extends from the clutch 30. Configuration of Planetary Gear Mechanism 31

The planetary gear mechanism 31 according to embodiment 1 includes a sun gear 32, a plurality of planetary gears 33, an internal gear 34, and a carrier 35. The carrier 35 supports the planetary gears 33. The sun gear 32 is disposed on an outer circumferential side of the pinion shaft 106 and coupled to the lock wheel 36 in a torque transmittable manner. The planetary gears 33 are disposed on an outer circumferential side of the sun gear 32 and on an inner circumferential side of the internal gear 34 so as to mesh with the sun gear 32 and the internal gear 34. The internal gear 34 is coupled to the input shaft 105 in a torque transmittable manner. The carrier 35 is coupled to the pinion shaft 106 in a torque transmittable manner. The carrier 35 supports each of the planetary gears 33 rotatably, namely, to rotate about its own axis and revolve. Specifically, the carrier 35 and the pinion shaft 106 are spline-fitted to each other at a position indicated by A in FIG. 3.

### Configuration of Lever 41

The lever 41 according to embodiment 1 is displaced between a first position and a second position. In embodiment 1, when a plunger 39 is pressed against the lever 41 by a function of a solenoid 38 connected to the second housing 49, the lever 41 is driven and displaced to the first position and becomes separate from the lock wheel 36. Thus, the lock wheel 36 and the sun gear 32 shift to a non-fixed state (rotatable state). This mechanically disestablishes the torque transmission path between the input shaft 105 and the pinion shaft 106. It is noted that when the lever 41 is displaced to the first position, a stopper pin (not illustrated) is brought into contact with the lever 41 and prevents the lever 41 from being further displaced.

The lever 41 is biased to the second position by a spring 40 disposed in the second housing 49. When the lever 41 is displaced to the second position, the lever 41 is engaged with a groove 45 of the lock wheel 36. Then, the lock wheel 36 and the sun gear 32 become fixed (unrotatable state). This mechanically couples the torque transmission path between the input shaft 105 and the pinion shaft 106.

### Detailed Configuration of Carrier 35

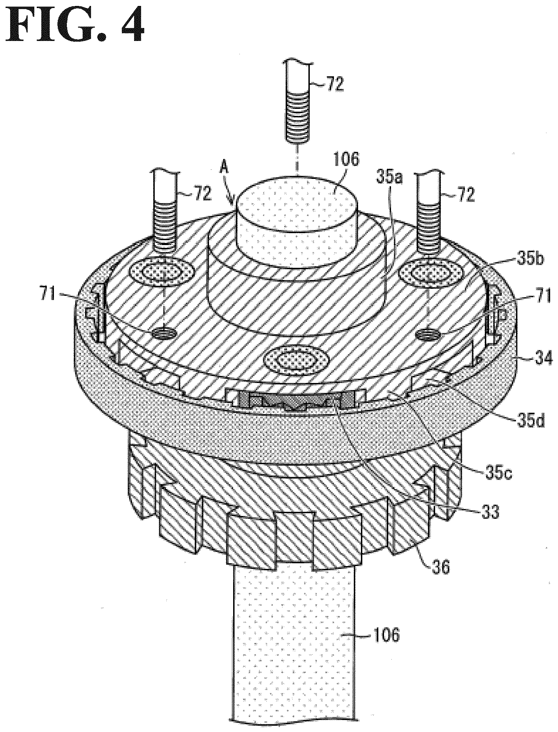

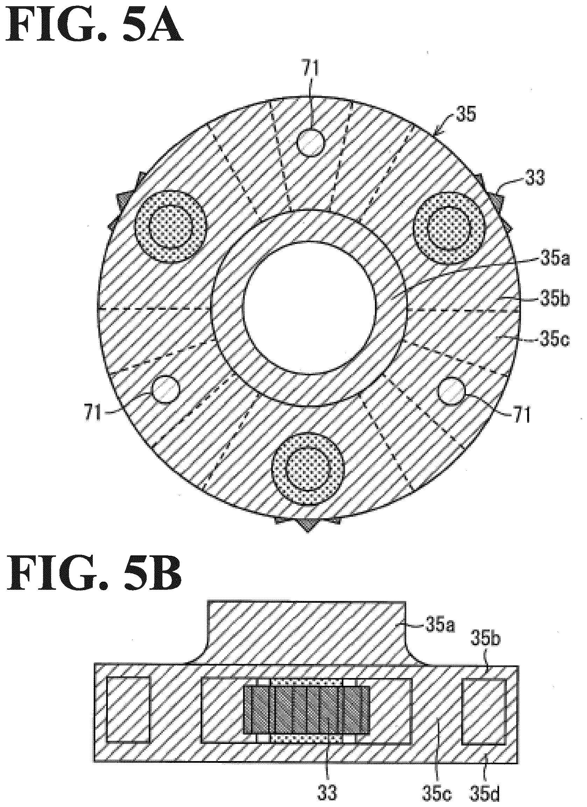

FIG. 4 is a perspective view of a configuration of the carrier 35 and the components surrounding it. FIGs. 5A and 5B illustrate a configuration of the carrier 35, of which FIG. 5A is a top view of the carrier 35, and FIG. 5B is a side view of the carrier 35.

As illustrated in FIGs. 4, 5A, and 5B, the carrier 35 includes a coupling portion 35a, a plate 35b, a plate 35d, and supports 35c. The coupling portion 35a is spline-fitted to the pinion shaft 106 at the position indicated by A in FIG. 4. The planetary gears 33 are interposed between the plates 35b and 35d and rotatably supported. The supports 35c are interposed between the plates 35b and 35d to support the plates 35b and 35d while keeping the plates 35b and 35d at a distance from each other.

The present invention, however, should not be limited to this configuration of the carrier 35. Insofar as the coupling portion 35a is coupled to the pinion shaft 106 in a torque transmittable manner, a method other than spline-fitting may be used. The supports 35c and the plate 35d may be omitted to make only the plate 35b support the planetary gears 33 rotatably.

The plate 35b includes tapped holes (coupling portions) 71. When the carrier 35 is detached from the clutch 30, detachment members 72 are screwed in the tapped holes 71 to couple the detachment members 72 to the carrier 35 so as to detach the carrier 35 from the clutch 30 successfully. It is noted that detaching the carrier 35 from the clutch 30 refers to separating the carrier 35, which is incorporated in the clutch 30, from the clutch 30, and that its signification includes separating the carrier 35 from the clutch 30 in a state in which the clutch 30 is already separated from other components.

The planetary gears 33 supported by the carrier 35 mesh with the sun gear 32 and the internal gear 34. Consequently, when the carrier 35 is detached from the clutch 30, even if one of the sun gear 32 and the internal gear 34 is first detached, for example, the other of the sun gear 32 and the internal gear 34 meshes with the planetary gears 33. In order to detach the carrier 35 from the clutch 30, therefore, it is necessary to move the carrier 35 in an axial direction of the planetary gears 33.

Here, the detachment members 72 coupled to the carrier 35 are used to readily move the carrier 35 in the desired direction so as to detach the carrier 35 from the clutch 30.

Particularly, as in embodiment 1, in the case where the carrier 35 is spline-fitted to the pinion shaft 106, a direction of detachment of the carrier 35 is strictly restricted. Even in this case, the detachment members 72 are coupled to the carrier 35 and used to move the carrier 35 in the desired direction. Thus, the carrier 35 can be detached from the clutch 30 successfully.

In one embodiment, the tapped holes 71 may be formed in the plate 35b or the plate 35d. When the input shaft 105 is first detached in disassembly of the clutch 30, for example, the tapped holes 71 may be formed in a surface of the carrier 35 on the input shaft 105 side (plate 35b). When the pinion shaft 106 is first detached in disassembly of the clutch 30, the tapped holes 71 may be formed in a surface of the carrier 35 on the pinion shaft 106 side (plate 35d). In embodiment 1, the tapped holes 71 are formed in the plate 35b.

In one embodiment, the tapped holes 71 should preferably be formed in the plate 35b or the plate 35d at positions where the planetary gears 33 are not disposed. More preferably, the tapped holes 71 should be formed at positions on the plate 35b or the plate 35d where the planetary gears 33 and the supports 35c are not disposed. That is, as illustrated in FIG. 5, spaces interposed between the supports 35c alternately accommodate the planetary gear 33. The tapped holes 71 should more preferably be formed in the spaces where the planetary gears 33 are not disposed.

In embodiment 1, the tapped holes 71 are tapped to penetrate the plate 35b. The present invention, however, should not be limited to this configuration. Insofar as the detachment members 72 can be screwed in the tapped holes 71, the tapped holes 71 may not necessarily be tapped to penetrate the plate 35b.

### Method of Disassembling Clutch 30

Next, a method for disassembling the clutch 30 according to embodiment 1 will be described. The method for disassembling the clutch 30 according to embodiment 1 includes a carrier detachment step of screwing (coupling) the detachment members 72 in the tapped holes 71, as described above, to detach the carrier 35 from the clutch 30.

In the method for disassembling the clutch 30 according to embodiment 1, the first housing 48 is first detached from the second housing 49. Next, the input shaft 105 is detached away from the pinion shaft 106 in an axial direction of the pinion shaft 106. At this time, the internal gear 34 coupled to the input shaft 105 is also detached.

Next, the detachment members 72 are coupled to the tapped holes 71. Then, the detachment members 72 are used to pull out the carrier 35 away from the pinion shaft 106 in the axial direction of the pinion shaft 106 so as to detach the carrier 35 from the clutch 30 (the carrier detachment step).

After that, the sun gear 32 and the lock wheel 36 are detached, and the pinion shaft 106 is further detached to disassemble the clutch 30.

### Embodiment 2

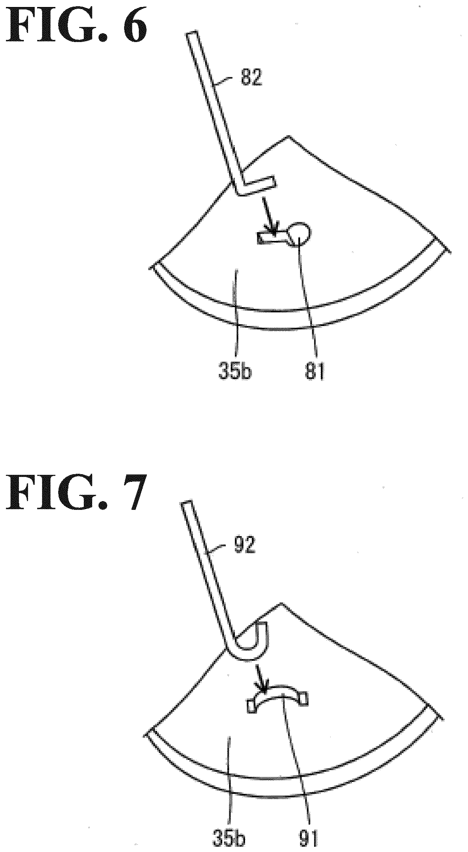

Another configuration of the coupling portion and the detachment member described in embodiment 1 will be described with reference to FIG. 6. FIG. 6 is a perspective view of the configuration of a coupling portion and a detachment member in embodiment 2.

In embodiment 2, as illustrated in FIG. 6, keyway holes (coupling portions) 81 are formed in the plate 35b of the carrier 35. The keyway holes 81 are formed as through holes. A detachment member 82 is inserted in each of the keyway holes 81, and in this state, the detachment member 82 is rotated about an axis that is a direction of insertion of the detachment member 82. Then, the keyway hole 81 and the detachment member 82 are engaged with each other to couple the carrier 35 to the detachment member 82.

In embodiment 2, when the carrier 35 is detached from the clutch 30, the detachment members 82 are inserted in the keyway holes 81 to couple the keyway holes 81 and the detachment members 82 to each other in the above-described manner. Then, the detachment members 82 are pulled away from the pinion shaft 106 in the axial direction of the pinion shaft so as to detach the carrier 35 from the clutch 30.

### Embodiment 3

Another configuration of the coupling portions and the detachment members described in embodiments 1 and 2 will be described with reference to FIG. 7. FIG. 7 is a perspective view of the configuration of a coupling portion and a detachment member according to embodiment 3.

In embodiment 3, as illustrated in FIG. 7, loops (coupling portions) 91 to support the carrier 35 are formed on the plate 35b of the carrier 35. A detachment member 92 has such a shape as to hook the detachment member 92 in the loop 91.

In embodiment 3, when the carrier 35 is detached from the clutch 30, the detachment members 92 are hooked in the loops 91 to couple the detachment members 92 to the carrier 35. Then, the detachment members 92 are pulled away from the pinion shaft 106 in the axial direction of the pinion shaft 106 so as to detach the carrier 35 from the clutch 30.

In the clutch including the planetary gear mechanism, the carrier and other components are closely assembled. Consequently, once the carrier is attached to the clutch, it is difficult to detach the carrier from the clutch. For maintenance or other occasions, therefore, disassembly of the clutch takes time and labor.

The embodiments make the carrier readily detachable from the clutch.

Obviously, numerous modifications and variations of the present invention are possible in light of the above teachings. It is therefore to be understood that within the scope of the appended claims, the present invention may be practiced otherwise than as specifically described herein.

## Claims

1. A clutch configured to mechanically establish and disestablish a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear; and
a carrier coupled to the output shaft in a torque transmittable manner and configured to support the planetary gears rotatably, the carrier comprising a coupling portion to be coupled to a detachment member configured to detach the carrier from the clutch.

2. The clutch according to claim 1, wherein the coupling portion comprises a tapped hole in which the detachment member is screwed.

3. The clutch according to claim 1, wherein the coupling portion comprises a through hole in which the detachment member is inserted, the through hole being formed in such a manner that when the inserted detachment member is rotated, the detachment member is caught in the through hole.

4. The clutch according to claim 1, wherein the coupling portion comprises a loop in which the detachment member is hooked.

5. The clutch according to claim 1, wherein the carrier comprises
two plates configured to hold and rotatably support the planetary gears between the two plates, and
supports held between the two plates to support the two plates while keeping the two plates at a distance from each other, and
wherein the coupling portion is disposed at a position on one of the two plates where the two plates hold none of the planetary gears and the supports.

6. The clutch according to any one of claims 2 to 5, wherein the output shaft is spline-fitted to the carrier.

7. A steering device comprising
a clutch configured to mechanically establish and disestablish a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear; and
a carrier coupled to the output shaft in a torque transmittable manner and configured to support the planetary gears rotatably, the carrier comprising a coupling portion to be coupled to a detachment member configured to detach the carrier from the clutch.

8. A method for disassembling a clutch configured to mechanically establish and disestablish a torque transmission path between an input shaft through which a torque is input and an output shaft through which the torque is output, the clutch comprising:
a sun gear configured to switch between a fixed state and a non-fixed state;
an internal gear coupled to the input shaft in a torque transmittable manner;
planetary gears configured to mesh with the sun gear and the internal gear; and
a carrier coupled to the output shaft in a torque transmittable manner and configured to support the planetary gears rotatably, the carrier comprising a coupling portion to be coupled to a detachment member configured to detach the carrier from the clutch,
the method comprising coupling the detachment member to the coupling portion to detach the carrier from the clutch.

9. The clutch according to claim 2,
wherein the carrier comprises
two plates configured to hold and rotatably support the planetary gears between the two plates, and
supports held between the two plates to support the two plates while keeping the two plates at a distance from each other, and
wherein the coupling portion is disposed at a position on one of the two plates where the two plates hold none of the planetary gears and the supports.

10. The clutch according to claim 3,
wherein the carrier comprises
two plates configured to hold and rotatably support the planetary gears between the two plates, and
supports held between the two plates to support the two plates while keeping the two plates at a distance from each other, and
wherein the coupling portion is disposed at a position on one of the two plates where the two plates hold none of the planetary gears and the supports.

11. The clutch according to claim 4,
wherein the carrier comprises
two plates configured to hold and rotatably support the planetary gears between the two plates, and
supports held between the two plates to support the two plates while keeping the two plates at a distance from each other, and
wherein the coupling portion is disposed at a position on one of the two plates where the two plates hold none of the planetary gears and the supports.

12. The clutch according to any one of claims 9 to 11, wherein the output shaft is spline-fitted to the carrier.
